# EUROPÄISCHE PATENTSCHRIFT

(11) **EP 1 864 833 B1**
(45) Veröffentlichungstag und Bekanntmachung des Hinweises auf die Patenterteilung: **14.04.2010**
(21) Anmeldenummer: 07006137.9
(22) Anmeldetag: 26.03.2007
(51) Int. Cl.: B60D 5/00, B61D 17/20, B62D 47/02

(54) **Aus mehreren Fahrzeugteilen kuppelbares Gelenkfahrzeug**
Articulated vehicle composed of several coupled vehicle sections
Véhicule articulé pouvant être couplé à plusieurs accessoires automobiles

(30) Priorität: 09.06.2006 DE 202006009083 U
(43) Veröffentlichungstag der Anmeldung: 12.12.2007
(73) Patentinhaber: Hübner GmbH, 34123 Kassel (DE)
(72) Erfinder: Karasek, Jens, 34260 Kaufungen (DE); Koch, Robert, 37242 Bad Sooden-Allendorf (DE); Scharf, Lothar, 37242 Bad Sooden-Allendorf (DE)
(74) Vertreter: Walther, Walther & Hinz GbR

(56) Entgegenhaltungen:
- WO-A-95/06580
- WO-A-97/42045
- WO-A-03/106238
- DE-A1- 3 407 327
- DE-A1- 19 503 081
- GB-A- 2 009 691
- US-A- 4 765 249

## Beschreibung

Die vorliegende Erfindung betrifft ein aus mehreren Fahrzeugteilen kuppelbares Gelenkfahrzeug.

Ein aus mehreren Teilen kuppelbares Gelenkfahrzeug ist aus dem Stand der Technik hinreichend bekannt (EP 1531117). So sind insbesondere solche Gelenkfahrzeuge bekannt, bei denen ein Anhängerteil angekuppelt werden kann, wobei das Anhängerteil mit dem Zugfahrzeug durch einen Übergang verbunden ist, so dass Personen von einem Fahrzeugteil in das andere Fahrzeugteil hinüberwechseln können. Mit einem solchen kuppelbaren Gelenkfahrzeug wird der Tatsache Rechnung getragen, dass z. B. Busse zu bestimmten Zeiten höher frequentiert sind als zu anderen Zeiten. Das heißt, dass durch ein solches Gelenkfahrzeug, bei dem der Hänger kuppelbar mit dem Zugfahrzeug verbindbar ist, eine Anpassung an die jeweils erforderlichen Transportkapazitäten erfolgen kann.

Darüber hinaus sind bei Bussen auch sogenannte Doppelgelenkzüge bekannt, die eine Transportkapazität von weit mehr als 250 Personen aufweisen. Bei diesen Gelenkzügen sind die einzelnen Wagenteile nicht in dem Sinne miteinander kuppelbar, dass durch Kuppeln einzelner Fahrzeugteile die Transportkapazität an die jeweils vorhandenen Erfordernisse anpassbar wäre. Nachteilig an einem solchen Doppelgelenkfahrzeug ist insbesondere auch, dass solche Fahrzeuge einen relativ großen Wendekreis haben, wenn die hinteren Achsen nicht lenkbar ausgestaltet sind.

Darüber hinaus sind Straßenbahnzüge bekannt, die aus einzelnen Wagenteilen bestehen, die allerdings auch fest miteinander verbunden sind, wobei in diesem Zusammenhang unter dem Begriff "fest" zu verstehen ist, dass solche Straßenbahnzüge nicht in ihrer Transportkapazität an die jeweils vorherrschenden Verhältnisse anpassbar sind.

Nachteilig bei Straßenbahnzügen ist insbesondere auch, dass die Infrastruktur für den Betrieb einer Straßenbahn, nämlich insbesondere das Verlegen von Schienen und Oberleitungen, mit nicht unerheblichen Kosten verbunden ist. Das heißt, der Betrieb von Straßenbahnen ist relativ teuer, gleichwohl der Betrieb von Straßenbahnen auch umweltschonend ist. Der Betrieb von Bussen hingegen, die auf öffentlichen Straßen fahren, ist auf Grund der nicht erforderlichen gesonderten Infrastruktur wesentlich preiswerter. Vorteilhaft bei Straßenbahnen ist insbesondere auch, dass diese als sogenannte "Zwei-Richtungs-Fahrzeuge" fungieren können.

Ein Gelenkfahrzeug gemäß dem Oberbegriff des Anspruchs 1 ist aus der GB-A-2 009 691 bekannt.

Der Erfindung liegt daher die Aufgabe zu Grunde, ein aus mehreren Fahrzeugteilen kuppelbares Gelenkfahrzeug für den Straßenverkehr bereitzustellen, das die Vorteile von Straßenbahnzügen und die Vorzüge von Gelenkbussen, insbesondere hinsichtlich solcher Gelenkbusse, deren Fahrzeugteile miteinander im Sinne einer Anpassung an die erforderliche Transportkapazität kuppelbar sind, miteinander kombiniert.

Die Aufgabe wird durch das Gelenkfahrzeug des Anspruchs 1 gelöst. Bei einem aus mehreren Fahrzeugteilen kuppelbaren Gelenkfahrzeug weist jedes Fahrzeugteil einen Kuppelrahmen auf, der durch einen Balg mit dem Fahrzeugteil verbunden ist, wobei zwischen Fahrzeugteil und Kuppelrahmen ein Gelenk vorgesehen ist, wobei das Gelenk einen Kupplungsträger aufweist, der sich in etwa in der Ebene des Kuppelrahmens befindet, wobei der Kupplungsträger zumindest Kupplungsmittel zur Kupplung mit dem Gelenk des anderen Fahrzeugteils aufweist. Hieraus wird deutlich, dass die Fahrzeugteile, die miteinander kuppelbar sind, im Bereich der Kupplung identisch ausgebildet sind. Das bedeutet, dass auf Grund der Symmetrie jedes Fahrzeugteil beliebig mit jedem anderen Fahrzeugteil kuppelbar ist, woraus sich eine enorme Variationsbreite durch Verbindung einzelner Fahrzeugteile ergibt.

So ist beispielsweise denkbar, zwei selbstständig fahrbare Busse miteinander zu kuppeln, um in solcherweise ein sogenanntes "Zwei-Richtungs-Fahrzeug" zu erhalten. Denkbar ist ebenfalls, zwischen zwei solchermaßen aktive Fahrzeugteile ein drittes passives Fahrzeugteil, beispielsweise in Form eines Anhängers, zu setzen. Ein solchermaßen ausgebildetes Gelenkfahrzeug in Form eines Busses hat insofern bereits große Ähnlichkeit mit einem Straßenbahnzug, abgesehen von der Tatsache, dass ein solcher Gelenkzug keine Schienen benötigt, sondern auf üblichen Straßen fahren kann. Insbesondere benötigt ein solches Gelenkfahrzeug, das eine Länge von bis zu 50 m aufweisen kann, an der jeweiligen Endhaltestelle keinen sogenannten "Wendehammer", der einen erheblichen Platzbedarf hat, sondern es reicht vielmehr aus, wenn der Fahrzeugführer von dem einen Busteil in das andere Busteil überwechselt, da es sich hierbei um ein sogenanntes "Zwei-Richtungs-Fahrzeug" handelt, wenn zu jeder Seite des Fahrzeugs ein im Wesentlichen selbstständiger Bus im Sinne eines aktiven Fahrzeugs gekuppelt ist. Die Kapazitätsanpassung erfolgt nun dadurch, dass bis auf das Hängermittelteil als passives Fahrzeugteil die beiden aktiven Fahrzeugteile jeweils im Solobetrieb gefahren werden können. Das heißt, mit einem solchen Gelenkfahrzeug werden die Vorteile einer Straßenbahn mit denen eines Gelenkbusses kombiniert, wobei zusätzlich eine Kapazitätsanpassung möglich ist.

Erfindungsgemäß ist vorgesehen, dass sich die Kupplungsmittel im Bereich der Mittellängsachse des Gelenkfahrzeugs an dem Kupplungsträger befinden. Die Kupplungsmittel sind hierbei männliche und weibliche Kuppelglieder, die zu beiden Seiten der Mittellängsachse des Gelenkfahrzeugs an dem Kupplungsträger angeordnet sind, was bedeutet, dass die Anordnung symmetrisch ist.

Des Weiteren ist vorgesehen, dass zu beiden Seiten der Kupplungsmittel an dem Kupplungsträger weitere weibliche und männliche Kupplungsglieder für Strom-, Druckluft- und/oder Hydraulikleitungen vorgesehen sind, um Energie und auch Daten von dem angetriebenen Fahrzeug zu den anderen passiven Fahrzeugteilen zu transportieren.

Nach einem weiteren vorteilhaften Merkmal ist vorgesehen, dass der Wagenteil im Bereich des Bodens eine Einschuböffnung zur Aufnahme des Gelenks aufweist. Das heißt, dass das Gelenk in den Wagenboden zumindest partiell einschiebbar ist, wobei die Einschiebtiefe des Gelenks im Wesentlichen durch die maximale Komprimierbarkeit des Balges und die Stärke des Kuppelrahmens bestimmt ist.

Nach einem weiteren, besonders vorteilhaften Merkmal der Erfindung weist der Kuppelrahmen einen den Kuppelrahmen umlaufend umgebenden Montagerahmen auf, der der Befestigung des Balges dient. Das heißt, dass dieser Montagerahmen eine äußere Kontur aufweist, die im Wesentlichen der Kontur des Balges oder auch der Kontur des Wagen- oder Fahrzeugteils entspricht. Bereits an anderer Stelle wurde dargelegt, dass der Kupplungsträger männliche und weibliche Kupplungsglieder für Strom-, Druckluft- und/oder Hydraulikleitungen aufweist. Denkbar ist nach einer Variante, dass der Montagerahmen im Dachbereich des Balges in der Mittellängsachse des Gelenkfahrzeugs männliche und weibliche Kupplungsglieder für Strom-, Druckluft- und/oder Hydraulikleitungen besitzt, wobei die Verteilung der Kupplungsglieder symmetrisch zur Mittellängsachse des Fahrzeugs erfolgen muss. Die symmetrische Anordnung der Kupplungsglieder ist Voraussetzung dafür, dass die einzelnen Wagenteile, also sowohl die passiven als auch die aktiven Wagenteile, beliebig miteinander kuppelbar sind. Erst dadurch eröffnet sich die gewünschte große Variationsbreite in der praktischen Anwendung, insbesondere im Hinblick auf die gewünschte Anpassung der Transportkapazitäten.

Nach einem weiteren Merkmal der Erfindung ist zwischen Fahrzeugteil und Kuppelrahmen über dem Gelenk eine Übergangsplattform vorgesehen, um Personen den Durchgang von dem einen Wagenteil zu dem anderen Wagen- oder Fahrzeugteil zu ermöglichen. Die Übergangsplattform weist hierbei vorzugsweise einen Drehteller auf, wobei der Drehpunkt des Drehtellers in einer Ebene mit der Drehachse des Gelenks liegt, d. h. die beiden Gelenkpunkte liegen übereinander. Um im entkuppelten Zustand der einzelnen Fahrzeugteile dafür zu sorgen, dass die stirnseitige Öffnung verschlossen werden kann, sind Mittel zum Verschließen der Öffnung vorgesehen, wobei hierbei verschiedene Ausführungsformen zum Verschließen der Öffnung der Stirnseite des Fahrzeugs denkbar sind. So ist zum einen denkbar, bei eingezogenem Balg, also entsprechend auch bei eingeschobenem Gelenk, das gesamte hintere Wagenteil durch ein Rollo abzudecken bzw. es besteht die Möglichkeit, das Heck eines solchen Fahrzeuges mit einer Haube abzudecken.

Anhand der Zeichnungen wird die Erfindung nachstehend beispielhaft näher erläutert.
- Figur 1: zeigt ein Gelenkfahrzeug mit zwei aktiven Fahrzeugteilen;
- Figur 2: zeigt ein Gelenkfahrzeug mit zwei aktiven Fahrzeugteilen, zwischen denen ein passives Fahrzeugteil angeordnet ist;
- Figur 3: zeigt die Einzelheit x aus Figur 2 in einer Seitenansicht;
- Figur 4: zeigt die Einzelheit y aus Figur 3 in einer perspektivischen Darstellung von unten gesehen;
- Figur 5: zeigt die Einzelheit y aus Figur 3 in einer perspektivischen Ansicht von oben;
- Figur 6: zeigt den Ausschnitt z gemäß Figur 5 in vergrößerter Darstellung.

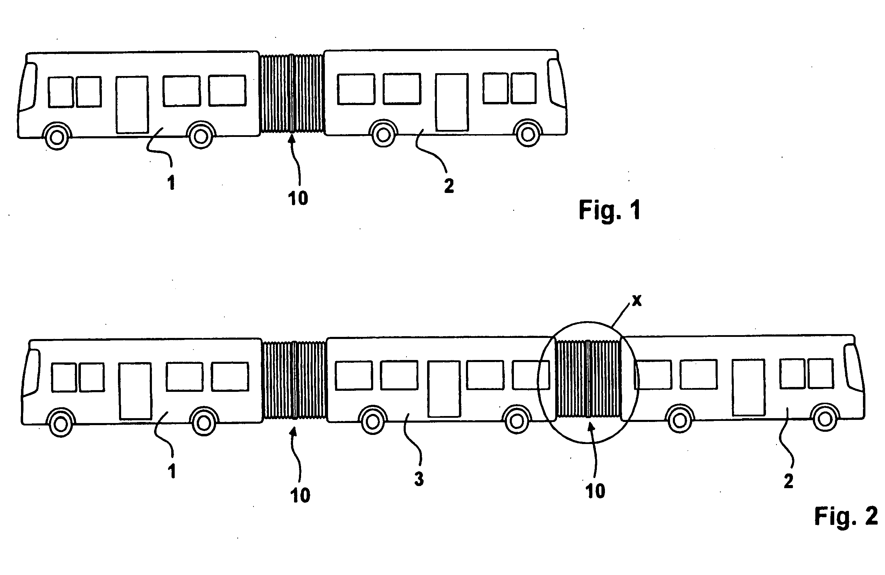

Ein Gelenkfahrzeug gemäß Figur 1 besteht aus zwei aktiven Fahrzeugen 1 und 2, die durch eine Verbindungseinrichtung 10 miteinander verbindbar sind. Unter einem aktiven Fahrzeugteil wird hierbei ein Fahrzeugteil verstanden, das selbstständig am Straßenverkehr teilnehmen kann, da es insbesondere über einen selbstständigen Antrieb und über einen eigenständigen Führerstand verfügt.

Bei der Ausführungsform gemäß Figur 2 sind aktive Fahrzeugteile 1 und 2 vorgesehen, zwischen denen ein drittes, allerdings passives Fahrzeugteil 3 angeordnet ist, wobei die einzelnen Fahrzeugteile untereinander wiederum durch Verbindungseinrichtungen 10 miteinander in Verbindung stehen.

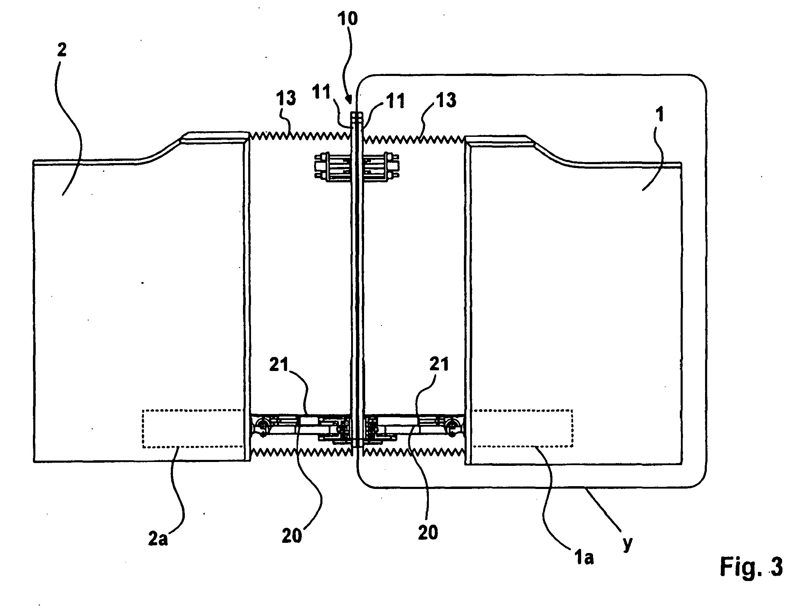

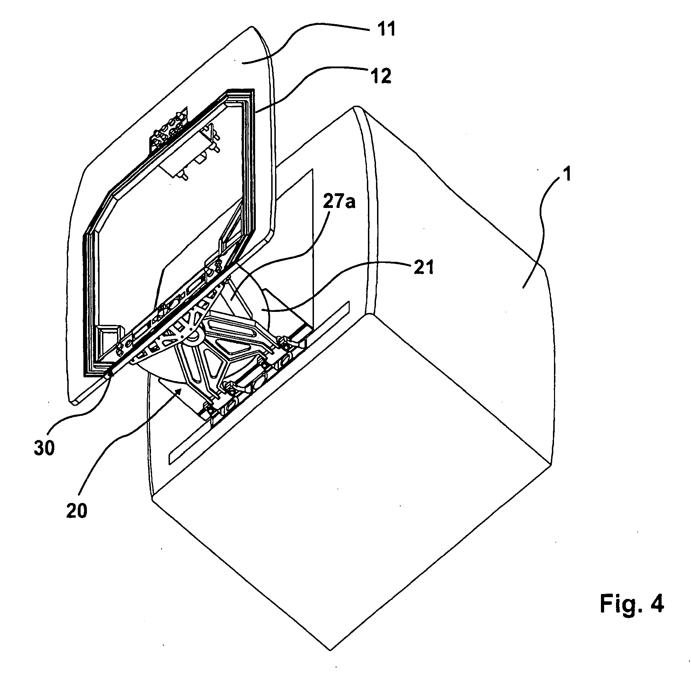

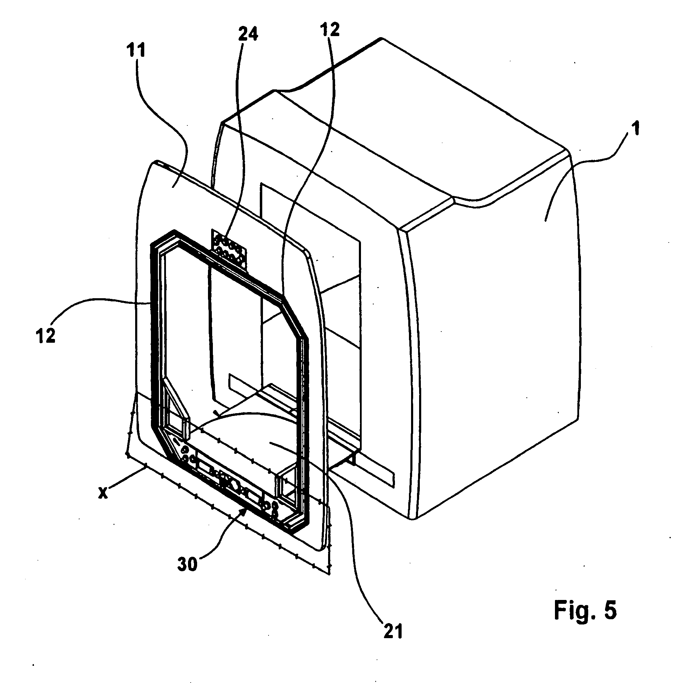

Eine solche Verbindungseinrichtung 10 ergibt sich aus der Darstellung gemäß Figur 3. Die Verbindungseinrichtung 10 umfasst die beiden Montagerahmen 11 sowie den innerhalb der jeweiligen Montagerahmen 11 angeordneten Kuppelrahmen 12, wie sich dies aus der Darstellung Figur 4 und Figur 5 ergibt. Die Montagerahmen 11 weisen jeweils einen Balg 13 auf, der am anderen Ende mit dem Fahrzeugteil verbunden ist. Die beiden Fahrzeugteile 1 und 2 zeigen darüber hinaus jeweils ein Gelenk 20, wobei sich über dem jeweiligen Gelenk 20 eine Plattform 21 befindet.

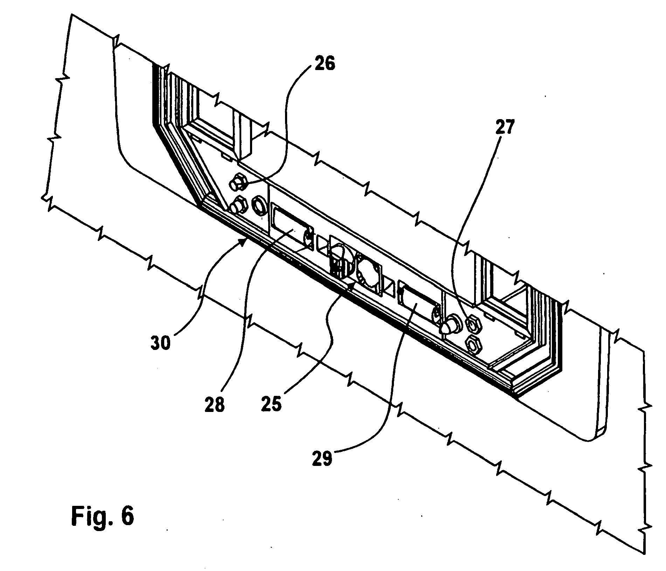

Die weiteren Einzelheiten der Ausgestaltung einer Verbindung zwischen dem jeweiligen Wagenteil und dem Montagerahmen ergeben sich insbesondere in Ansehung der Figuren 4 und 5. Der Kuppelrahmen 12 nimmt, wie bereits ausgeführt, den Montagerahmen 11 auf. Der Kuppelrahmen 12 weist im Bereich des Gelenkes 20 den Kupplungsträger 30 auf (Fig. 5, Fig. 6), wobei der Kupplungsträger 30 einerseits die Kupplungsmittel 25 zur mechanischen Verbindung der beiden Fahrzeuge untereinander aufweist und andererseits zu beiden Seiten der Mittellängsachse des Fahrzeugs weitere Kuppelglieder, so insbesondere männliche und weibliche Kuppelglieder 26, 27 sowie eine Elektrokupplung 28, 29, wobei an dieser Stelle noch einmal darauf hingewiesen wird, dass die Kuppelglieder zu einer Seite der Mittellängsachse des Gelenkfahrzeuges entweder männlich oder weiblich ausgebildet sind. Auch die mechanische Kupplung zur Verbindung der beiden Fahrzeugteile untereinander ist im Übrigen mit männlichen und weiblichen Kuppelgliedern zur jeweiligen Seite der Mittellängsachse des Fahrzeugs angeordnet, wobei sich hier der Einsatz einer "Scharfenbergkupplung®" anbietet. Derartige Kupplungen weisen jeweils Kegel und Trichter mit den entsprechenden Kupplungsgliedern auf. Im Deckenbereich des Kuppelrahmens 12 sind weitere Vorsorgungskupplungen 24 vorgesehen, die wiederum so zu beiden Seiten der Mittellängsachse des Fahrzeugs angeordnet sind, dass beim Kuppeln die Kupplungselemente beider Fahrzeuge zueinander korrespondieren. Das Gelenk 20 weist einen Dämpfer 27a auf, der einerseits mit dem Kupplungsträger 30 und andererseits mit dem Gelenk verbunden ist.

Die Fahrzeugteile 1 und 2 zeigen darüber hinaus Einschuböffnungen 1a und 2a, die der Aufnahme sowohl des Gelenkes als auch der Plattform 21 dienen, wenn nämlich der Montagerahmen 11 samt Balg 13 an das Fahrzeug herangezogen wird. Das Heck des Fahrzeuges bzw. die stirnseitige Öffnung des Fahrzeuges ist verschließbar, beispielsweise durch ein Rollo (nicht dargestellt).

Es wird an dieser Stelle noch einmal darauf hingewiesen, dass die Fahrzeuge im Hinblick auf ihre stirnseitige Ausbildung identisch sind, dass also alle Teile doppelt, aber symmetrisch, vorhanden sind. Nur hierdurch ergibt sich die gewünschte erforderliche Variationsvielfalt.

## Patentansprüche

1. Aus mehreren Fahrzeugteilen (1, 2) kuppelbares Gelenkfahrzeug, wobei jedes Fahrzeugteil (1, 2) einen Kuppelrahmen (10) aufweist, der durch einen Balg (13) mit dem Fahrzeugteil (1, 2) verbunden ist wobei zwischen Fahrzeugteil (1, 2) und Kuppelrahmen (12) ein Gelenk vorgesehen ist, wobei das Gelenk (20) einen Kupplungsträger (30) aufweist, wobei der Kupplungsträger (30) sich in etwa in der Ebene des Kuppelrahmens (12) befindet, wobei der Kupplungsträger (30) im Bereich der Mittellängsachse des Gelenkfahrzeugs zumindest Kupplungsmittel (25) zur Kupplung mit dem Gelenk (20) des anderen Fahrzeugteils (1, 2) aufweist, **dadurch gekennzeichnet, dass** zu beiden Seiten der Kupplungsmittel (25) an den Kupplungsträger weitere männliche und weibliche Kupplungsglieder für Strom-, Druckluft- und/oder Hydraulikleitungen vorgesehen sind.

2. Aus mehreren Fahrzeugteilen kuppelbares Gelenkfahrzeug nach einem der voranstehenden Ansprüche,
**dadurch gekennzeichnet,**
**dass** das Fahrzeugteil (1, 2) im Bereich des Bodens eine Einschuböffnung (10, 20) zur Aufnahme des Gelenks (20) aufweist.

3. Aus mehreren Fahrzeugteilen kuppelbares Gelenkfahrzeug nach einem der voranstehenden Ansprüche,
**dadurch gekennzeichnet,**
**dass** der Kuppelrahmen (12) einen den Kuppelrahmen (12) umlaufend umgebenden Montagerahmen (11) aufweist, der der Befestigung des Balges (13) dient.

4. Aus mehreren Fahrzeugteilen kuppelbares Gelenkfahrzeug nach einem der voranstehenden Ansprüche,
**dadurch gekennzeichnet,**
**dass** der Montagerahmen (11) im Dachbereich des Balges (13) in der Mittellängsachse des Gelenkfahrzeugs männliche und weibliche Kupplungsglieder (24) für Strom-, Druckluft- und/oder Hydraulikleitungen aufweist.

5. Aus mehreren Fahrzeugteilen kuppelbares Gelenkfahrzeug nach einem der voranstehenden Ansprüche,
**dadurch gekennzeichnet,**
**dass** zwischen Fahrzeugteil (1, 2) und Kuppelrahmen (12) über dem Gelenk (20) eine Übergangsplattform (21) vorgesehen ist.

6. Aus mehreren Fahrzeugteilen kuppelbares Gelenkfahrzeug nach einem der voranstehenden Ansprüche,
**dadurch gekennzeichnet,**
**dass** die Übergangsplattform (21) einen Drehteller aufweist, wobei der Drehpunkt des Drehtellers in der Drehachse des Gelenks (20) liegt.

7. Aus mehreren Fahrzeugteilen kuppelbares Gelenkfahrzeug nach einem der voranstehenden Ansprüche,
**dadurch gekennzeichnet,**
**dass** die offene Stirnseite des Fahrzeugteils (1, 2) verschließbar ist.

## Claims

1. Articulated vehicle able to be formed by coupling several vehicle parts (1, 2), wherein each vehicle part (1, 2) comprises a coupling frame (10) connected by a bellows (13) with the vehicle part (1, 2), wherein a joint is provided between vehicle part (1, 2) and coupling frame (12), wherein the joint (20) comprises a coupling support (30), wherein the coupling support (30) is disposed approximately in the plane of the coupling frame (12), and wherein the coupling support (30) has in the region of the centre longitudinal axis of the articulated vehicle at least coupling means (25) for coupling with the joint (20) of the other vehicle part (1, 2), **characterised in that** further male and female coupling elements for current, compressed air and/or hydraulic lines are provided at the coupling support on both sides of the coupling means (25).

2. Articulated vehicle able to be formed by coupling several vehicle parts according to the preceding claim, **characterised in that** the vehicle part (1, 2) has in the region of the floor a plug-in opening (10, 20) for reception of the joint (20).

3. Articulated vehicle able to be formed by coupling several vehicle parts according to one of the preceding claims, **characterised in that** the coupling frame (12) comprises a surrounding mounting frame (11) which encircles the coupling frame (12) and serves for fastening the bellows (13).

4. Articulated vehicle able to be formed by coupling several vehicle parts according to any one of the preceding claims, **characterised in that** the mounting frame (11) has male and female coupling element (24) for current, compressed air and/or hydraulic lines in the roof region of the bellows (13) in the centre longitudinal axis of the articulated vehicle.

5. Articulated vehicle able to be formed by coupling several vehicle parts according to any one of the preceding claims, **characterised in that** a transfer platform (21) is provided between vehicle part (1, 2) and coupling frame (12) over the joint (20).

6. Articulated vehicle able to be formed by coupling several vehicle parts according to any one of the preceding claims, **characterised in that** the transfer platform (21) comprises a turntable, wherein the fulcrum of the turntable lies in the rotational axis of the joint (20).

7. Articulated vehicle able to be formed by coupling several vehicle parts according to any one of the preceding claims, **characterised in that** the open end of the vehicle part (1, 2) is closable.

## Revendications

1. Véhicule articulé pouvant être formé par accouplement de plusieurs parties de véhicule (1, 2), dans lequel chaque partie de véhicule (1, 2) comporte un cadre d'attelage (10) qui est relié à la partie de véhicule (1, 2) par un soufflet (13), dans lequel une articulation est prévue entre la partie de véhicule (1, 2) et le cadre d'attelage (12), l'articulation (20) comportant un support d'accouplement (30), dans lequel le support d'accouplement (30) se trouve à peu près dans le plan du cadre d'attelage (12), ce support d'accouplement (30) comportant, dans la région de l'axe longitudinal médian du véhicule articulé, au moins des moyens d'accouplement (25) destinés à s'accoupler à l'articulation (20) de l'autre partie de véhicule (1, 2), **caractérisé en ce que**, des deux côtés des moyens d'accouplement (25), sont prévus, sur le support d'accouplement, d'autres éléments d'accouplement mâles et femelles pour les canalisations électriques, pneumatiques et/ou hydrauliques.

2. Véhicule articulé pouvant être formé par accouplement de plusieurs parties de véhicule selon l'une des revendications précédentes,
**caractérisé en ce que**
la partie de véhicule (1, 2) comporte, dans la région du plancher, une ouverture d'emmanchement (10, 20) destinée à recevoir l'articulation (20).

3. Véhicule articulé pouvant être formé par accouplement de plusieurs parties de véhicule selon l'une des revendications précédentes,
**caractérisé en ce que**
le cadre d'attelage (12) comporte un cadre de montage (11) qui entoure le cadre d'attelage (12) sur tout le tour et qui sert à la fixation du soufflet (13).

4. Véhicule articulé pouvant être formé par accouplement de plusieurs parties de véhicule selon l'une des revendications précédentes,
**caractérisé en ce que**
le cadre de montage (11) comporte, dans la région du toit du soufflet (13), dans l'axe longitudinal médian du véhicule articulé, des éléments d'accouplement (24) mâles et femelles pour les canalisations électriques, pneumatiques et/ou hydrauliques.

5. Véhicule articulé pouvant être formé par accouplement de plusieurs parties de véhicule selon l'une des revendications précédentes,
**caractérisé en ce que**
il est prévu une plate-forme de passage (21) entre une partie de véhicule (1, 2) et le cadre d'attelage (12), au-dessus de l'articulation (20).

6. Véhicule articulé pouvant être formé par accouplement de plusieurs parties de véhicule selon l'une des revendications précédentes,
**caractérisé en ce que**
la plate-forme de passage (21) comporte une plaque tournante, le centre de rotation de la plaque tournante se trouvant dans l'axe de rotation de l'articulation (20).

7. Véhicule articulé pouvant être formé par accouplement de plusieurs parties de véhicule selon l'une des revendications précédentes,
**caractérisé en ce que**
le côté frontal ouvert de la partie de véhicule (1, 2) peut être fermé.
